# EUROPEAN PATENT APPLICATION

(11) **EP 4 648 115 A1**
(43) Date of publication of application: **12.11.2025**
(21) Application number: 24849462.7
(22) Date of filing: 24.07.2024
(51) Int. Cl.: H01M 4/04, H01M 10/04, B26D 1/03, B26D 1/08, B26D 11/00, B65H 35/06, B65H 18/10

(54) **ELECTRODE PROCESSING APPARATUS**

(30) Priority: 28.07.2023 KR 20230099241
(71) Applicant: LG Energy Solution, Ltd., Seoul 07335 (KR)
(72) Inventor: KIM, Jae Hee, Daejeon 34122 (KR); KOO, Seong Mo, Daejeon 34122 (KR); KIM, Young Soo, Daejeon 34122 (KR); JEGAL, Jong Pil, Daejeon 34122 (KR); HAN, Jeong Hui, Daejeon 34122 (KR)
(74) Representative: Goddar, Heinz J.
(86) International application number: PCT/KR2024/010717
(87) International publication number: WO 2025/028893

(57) **Abstract**

The present disclosure relates to an electrode processing device, and provides an electrode processing device including an electrode cutting unit including a first cutter that cuts an electrode; and a deburring unit including a second cutter that cuts a burr protruding from the cut electrode cutting surface in the cutting direction of the first cutter.

## Description

### TECHNICAL FIELD

### CROSS-REFERENCE TO RELATED APPLICATIONS

The present application claims priority to Korean Patent Application No. 10-2023-0099241 filed on July 28, 2023 in the Republic of Korea, the disclosures of which are incorporated herein by reference.

### TECHNICAL FIELD

The present disclosure relates to an electrode processing device, and more specifically, to an electrode processing device capable of cutting an electrode and removing a burr generated from the electrode when cutting the electrode.

### BACKGROUND ART

A secondary battery is highly applicable to a variety of product groups and has electrical characteristics with high energy density. Such a secondary battery is applied not only to portable electronic devices but also to electric vehicles, hybrid vehicles, power storage devices, or the like driven by electric power sources. The secondary battery is attracting attention as a new energy source to improve eco-friendliness and energy efficiency in that it has not only a primary advantage of dramatically reducing the use of fossil fuels, but also no by-products generated from the use of energy.

The electrode assembly included in the secondary battery includes a separator and an electrode, and depending on the manufacturing method of the electrode assembly, it may be classified into a jelly-roll type in which a sheet-like positive electrode and negative electrode coated with an electrode active material having a separator interposed therebetween are wound, a stack type in which a plurality of positive electrodes and negative electrodes are sequentially stacked with a separator interposed therebetween, and a stack/folding type in which stack-type unit cells are wound with a long separation film.

In the manufacturing process of a jelly-roll type electrode assembly, a process of cutting the electrode to be included in the electrode assembly to the intended length is required. When cutting an uncoated portion that is not coated with the electrode active material in the electrode region, there is no problem of forming a burr on the cutting surface, but when cutting a coated portion region that is coated with the electrode active material, there may be a problem of the burr protruding from the electrode active material located on the cutting surface along the cutting direction. There is a problem in that the burr generated by cutting the coated portion of the electrode in this way may damage the separator, such as bending the separator by applying pressure to the adjacent separator in the electrode assembly manufactured by winding the electrode and separator. Accordingly, there is a need for the development of a technology to solve the above problem.

### SUMMARY

### TECHNICAL PROBLEM

The present disclosure is designed to solve the problems of the related art, and therefore the present disclosure is directed to providing an electrode processing device capable of removing a burr generated from the cutting surface when cutting a coated portion of an electrode, which is a region coated with an electrode active material.

### TECHNICAL SOLUTION

As Embodiment 1 of the present disclosure, the present disclosure provides an electrode processing device including an electrode cutting unit including a first cutter that cuts an electrode; and a deburring unit including a second cutter that cuts a burr protruding from the cut electrode cutting surface in the cutting direction of the first cutter.

Additionally, the electrode cutting unit may further include a pair of first holders coupled to both sides of the first cutter; and a first support portion formed with a first guide rail guiding the first holder.

Additionally, the second cutter may be driven in an intersecting direction with respect to the direction in which the first cutter cuts the electrode.

Additionally, the second cutter may be driven along a direction parallel to the direction in which the electrode is disposed.

Additionally, the deburring unit may further include a pair of second holders coupled to both sides of the second cutter; and a second support portion formed with a second guide rail guiding the second holder.

Additionally, the second cutter may protrude from the second holder in a direction in which the second cutter cuts the burr.

Additionally, an end of the second cutter may be disposed closer to the electrode than the second holder.

Additionally, the second cutter may be disposed parallel to the electrode, and a surface thereof facing the electrode may be formed in a planar shape.

Additionally, the second cutter may include a first portion coupled to the second holder; a second portion having one end connected to the first portion and forming a predetermined angle with respect to the first portion in a direction of being closer to the electrode; and a third portion having one end connected to the second portion and disposed parallel to the electrode.

Additionally, the third portion may have a surface facing the electrode formed in a planar shape and the other end extending in a straight line along the length direction.

Additionally, a guard groove recessed along the length direction may be formed on one surface of the first cutter, and the second cutter may be driven so that its end is inserted into the guard groove.

Additionally, the deburring unit may be driven as the electrode is cut.

Additionally, the first cutter may be fixed in position for a predetermined time after cutting the electrode.

Additionally, the second cutter may be driven to move toward one side surface of the first cutter whose position is fixed, and may cut the burr located on one side surface of the first cutter.

Additionally, the second cutter may cut the burr by contacting one side surface of the first cutter located in front of the second cutter in the movement direction.

Additionally, the electrode processing device may further include a pressing portion that presses the electrode from which the burr is cut.

Additionally, the electrode processing device may further include a winding portion that winds the pressed electrode together with a separator.

Additionally, the winding portion may wind the electrode so that the region where the burr is cut faces outward.

As Embodiment 2 of the present disclosure, the present disclosure provides an electrode assembly in which at least one of an electrode and a separator is stacked and wound, including a current collector; and an electrode active material coated on an inner surface and an outer surface of the current collector, wherein the electrode active material located on the outer surface of the end of the electrode has a higher density than an adjacent region.

### ADVANTAGEOUS EFFECTS

The present disclosure may manufacture an electrode having a flat surface by removing a burr protruding from the cutting surface along the cutting direction when cutting a coated portion region of an electrode, which is a region coated with an electrode active material, and may manufacture an electrode assembly with reduced possibility of damage to a separator.

Additionally, since the electrode is cut so that the coated portions are located at both ends of the electrode, the ratio of the coated portions that generate electrical energy in the total area of the electrode may be maximized, and a secondary battery with an increased electrical energy capacity compared to the same volume may be manufactured.

### BRIEF DESCRIPTION OF THE DRAWINGS

FIG. 1 is a cross-sectional view showing sequentially the process of processing an electrode by an electrode cutting device of the present disclosure.
FIG. 2 is a perspective view showing an electrode and an electrode cutting device as Embodiment 1 of the present disclosure.
FIG. 3 is a method for driving an electrode cutting device of the present disclosure, and is a cross-sectional view schematically showing a state in which a second cutter moves to cut a burr after a first cutter cuts an electrode.
FIG. 4 is a method for driving an electrode cutting device of the present disclosure, and is a cross-sectional view schematically showing a state in which a second cutter contacts a first cutter and cuts a burr.
FIG. 5 is a method for driving an electrode cutting device of the present disclosure, and is a cross-sectional view schematically showing a state in which a first cutter returns after a second cutter cuts a burr.
FIG. 6 is a method for driving an electrode cutting device of the present disclosure, and is a cross-sectional view schematically showing a state in which a second cutter returns after a second cutter cuts a burr.
FIG. 7 is an enlarged cross-sectional view of region 'A' of FIG. 4.
FIG. 8 is a front view showing a first cutter and a first holder of the present disclosure.
FIG. 9 is a perspective view showing a first implementation example of a second cutter of the present disclosure.
FIG. 10 is a perspective view showing a second implementation example of a second cutter of the present disclosure.
FIG. 11 is a cross-sectional view showing a state in which an electrode processed by the electrode cutting unit and the deburring unit is introduced into the pressing portion.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

### Embodiment 1

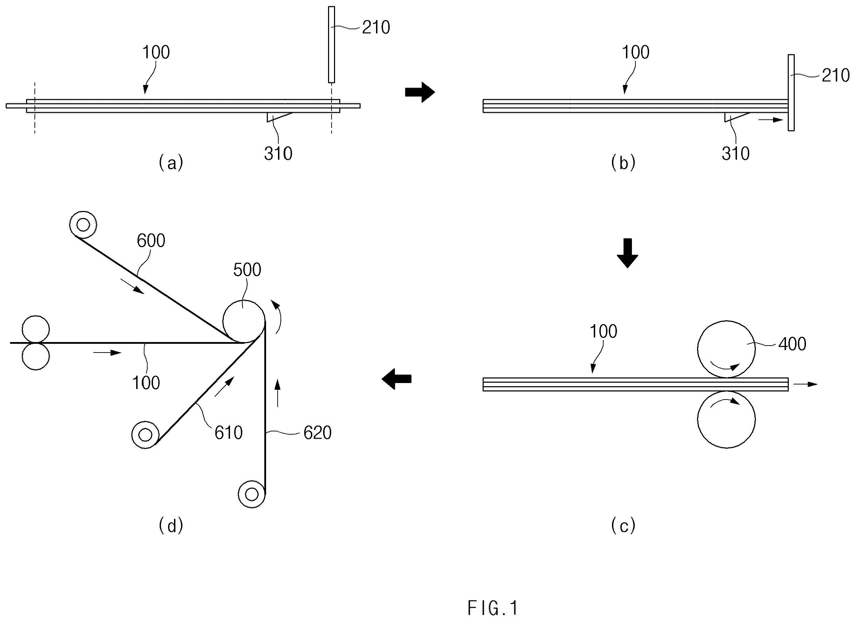

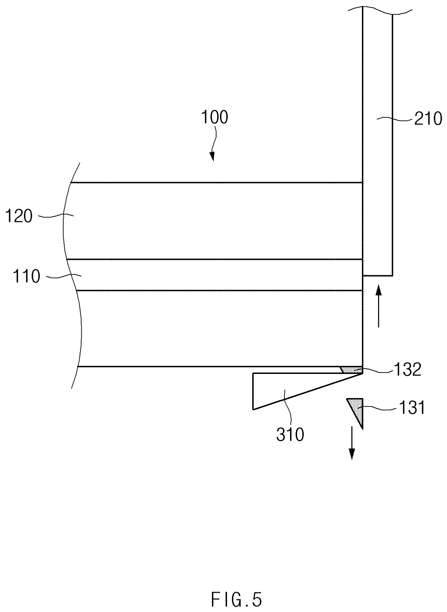

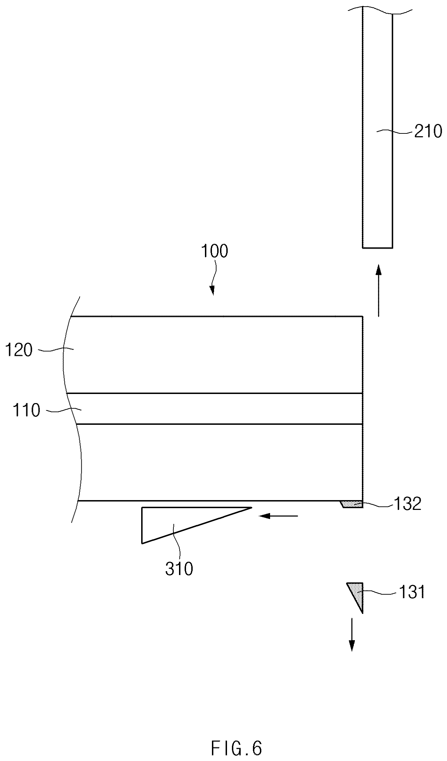

Referring to FIGS. 1 to 6, the electrode processing device 10 of the present disclosure may include an electrode cutting unit 200 and a deburring unit 300.

The electrode processing device 10 of the present disclosure may be a device for cutting an electrode 100 and flattening both ends of the cut electrode 100.

The electrode cutting unit 200 may cut the electrode 100, and more specifically, may cut a region coated with the electrode active material 120 among the regions of the electrode 100 where the electrode active material 120 is coated on the current collector 110. The electrode 100 may include a coated portion, which is a region where the electrode active material 120 is coated on one surface or both surfaces of the current collector 110, and an uncoated portion, which is a region where the electrode active material 120 is not coated. The electrode cutting unit 200 may be provided to cut the coated portion region where the electrode active material 120 is coated among the uncoated portion and coated portion regions of the electrode 100. Both ends of the electrode 100 may be formed as coated portion regions by the electrode cutting unit 200 cutting the coated portion region. By forming the end of the electrode 100 as a coated portion rather than an uncoated portion, the ratio of the coated portion capable of generating electrical energy in the total area of the electrode 100 may be maximized, and a larger electrical energy capacity compared to the same volume in the secondary battery may be formed.

The electrode cutting unit 200 may include a first cutter 210 that cuts the electrode 100. The first cutter 210 may be driven to move in a direction closer to or farther away from the electrode 100. The first cutter 210 may cut the electrode 100 by moving in a direction closer to the electrode 100. The first cutter 210 may be located above or below the electrode 100. The first cutter 210 may be driven to move reciprocally in a direction closer to or farther away from the electrode 100 so as to repeatedly cut the electrode 100.

The first cutter 210 may form a predetermined angle with respect to one surface of the electrode 100.

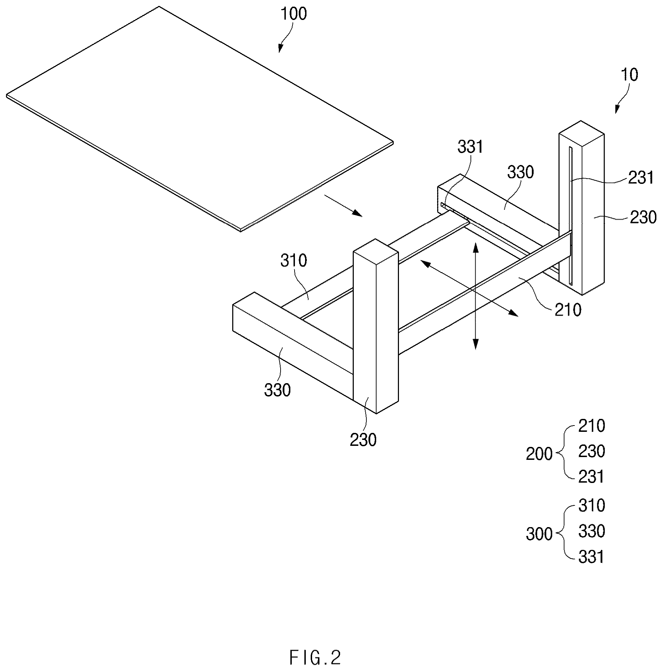

Referring to FIG. 2, as one embodiment, the first cutter 210 may be disposed in a direction perpendicular to one surface of the electrode 100 so that the end formed with the blade faces the one surface of the electrode 100. Since the first cutter 210 is driven to move along a direction perpendicular to one surface of the electrode 100, the first cutter 210 may cut the coated portion region of the electrode 100 so that the cutting surface of the electrode 100 is perpendicular to one surface of the electrode 100. The end of the first cutter 210 may extend in a straight line along the length direction.

As another embodiment, the first cutter 210 may be disposed in a diagonal direction with respect to one surface of the electrode 100. The first cutter 210 may be driven along a diagonal direction with respect to one surface of the electrode 100, and an inclined surface with respect to one surface of the electrode 100 may be formed on the cutting surface of the electrode 100 cut by the first cutter 210.

The electrode cutting unit 200 may further include a pair of first holders 211 and a first support portion 230.

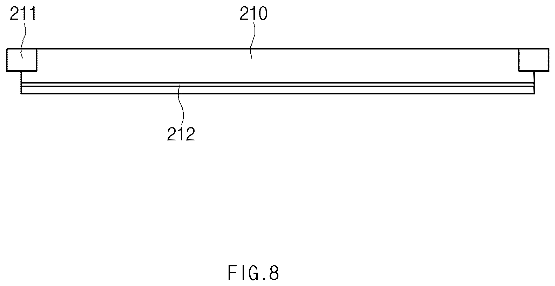

Referring to FIG. 8, a pair of first holders 211 may be coupled to one side and the other side of the first cutter 210 in the length direction, respectively. The length direction of the first cutter 210 is a direction forming the longest length in the first cutter 210 and may be a direction in which a blade located at the end of the first cutter 210 is formed along one direction.

The pair of first holders 211 may have one end coupled to the first cutter 210 and the other end protruding outward further than the first cutter 210 along the length direction of the first cutter 210.

The first cutter 210 may be coupled so that the end facing the electrode 100 protrudes further along the width direction of the first cutter 210 than the first holder 211. The width direction of the first cutter 210 is a direction perpendicular to the length direction and the thickness direction, and may mean the direction in which the first cutter 210 cuts the electrode 100.

The other end of the first holder 211 is located on the first guide rail 231 formed on the first support portion 230, and the first holder 211 may be guided along the first guide rail 231.

The first support portion 230 may be provided in a pair, and the pair of first support portions 230 may be spaced apart from each other by a predetermined distance so that the first cutter 210 may be disposed therebetween.

The first support portion 230 may be disposed in a direction in which the length direction is parallel to the direction in which the first cutter 210 cuts the electrode 100.

The first support portion 230 may have the first guide rail 231 formed along the length direction of the first support portion 230.

The first guide rail 231 may be formed on a surface where the pair of first support portions 230 face each other.

The first guide rail 231 may be formed to be recessed along the length direction of the first support portions 230 to a predetermined depth on a surface where the pair of first support portions 230 face each other.

The other end of the first holder 211 is inserted into the first guide rail 231, and the first holder 211 may be guided along the length direction of the first guide rail 231. Since a pair of first holders 211 are coupled to both sides of the first cutter 210, the first cutter 210 may be guided together with the first holder 211 as the first holder 211 is guided by the first guide rail 231.

The first cutter 210 may move closer to or farther away from the electrode 100 as it is guided by the first holder 211. The first cutter 210 may cut the electrode 100 as it moves closer to the electrode 100.

The deburring unit 300 may be provided to cut a burr 130 protruding from the cutting surface of the electrode 100 cut by the first cutter 210 in the cutting direction of the first cutter 210.

The first cutter 210 cuts the coated portion of the electrode 100, and thus, when the electrode active material 120 coated on one surface or both surfaces of the current collector 110 is cut by the first cutter 210, the end of the electrode active material 120 located on the cutting surface may protrude in the cutting direction of the first cutter 210 along the first cutter 210 moving while cutting the electrode 100. In this way, the electrode active material 120 protruding along the cutting direction may form a burr 130. The burr 130 may exert pressure on separators 600, 610 in contact with the burr 130 in the electrode assembly due to its protruding shape, thereby causing damage, and as the separators 600, 610 are damaged, the electrodes 100 of different polarities may be electrically connected and an electrical short-circuit may occur.

The deburring unit may include second cutters 310, 320 that cut the burr 130 protruding from the cutting surface of the electrode 100.

The second cutters 310, 320 may be driven to move in an intersecting direction with respect to the direction in which the first cutter 210 cuts the electrode 100 so as to cut the burr 130 protruding from the electrode 100.

The second cutters 310, 320 may be driven to move in a direction parallel to the direction in which the electrode 100 is disposed, and may cut the burr 130 protruding from the electrode 100 as the second cutters 310, 320 move closer to the burr 130.

The second cutters 310, 320 may be disposed above or below the electrode 100 depending on the direction in which the first cutter 210 cuts the electrode 100. As one embodiment, when the first cutter 210 is disposed above the electrode 100 and cuts the electrode 100 while moving from the top to the bottom of the electrode 100, the second cutters 310, 320 may be disposed below the electrode 100. As another embodiment, when the first cutter 210 is disposed below the electrode 100 and cuts the electrode 100 while moving from the bottom to the top of the electrode 100, the second cutters 310, 320 may be disposed above the electrode 100.

When the first cutter 210 cuts the coated portion region of the electrode 100, a burr 130 may protrude from the cutting surface of the electrode active material 120 along the cutting direction of the first cutter 210.

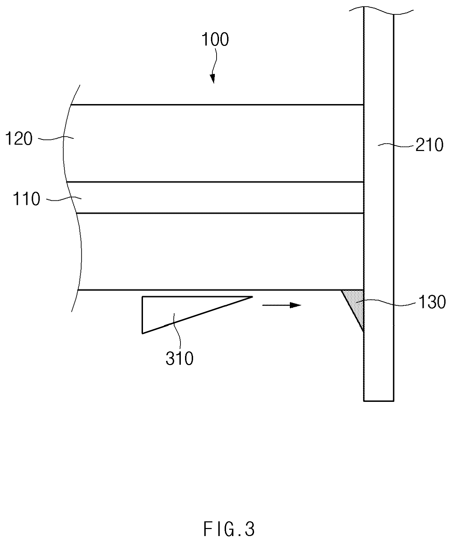

Referring to FIGS. 3 to 6, the first cutter 210 is fixed in position for a predetermined time in a state where one side surface is adjacent to the cutting surface of the electrode 100 after cutting the electrode 100, and a burr 130 protruding from the electrode 100 may be located on one side surface of the first cutter 210. The second cutters 310, 320 may be driven to move toward one side surface of the first cutter 210 whose position is fixed, and may cut the burr 130 located on one side surface of the first cutter 210. The second cutters 310, 320 may reliably cut and remove the burr 130 by contacting or colliding with one side surface of the first cutter 210 located in front of the second cutters 310, 320 in the movement direction. After the burr 130 is cut, the first cutter 210 and the second cutters 310, 320 may return to the positions before cutting the electrode 100 and the burr 130.

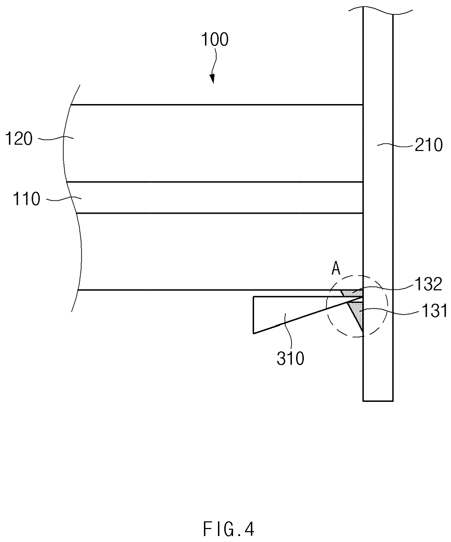

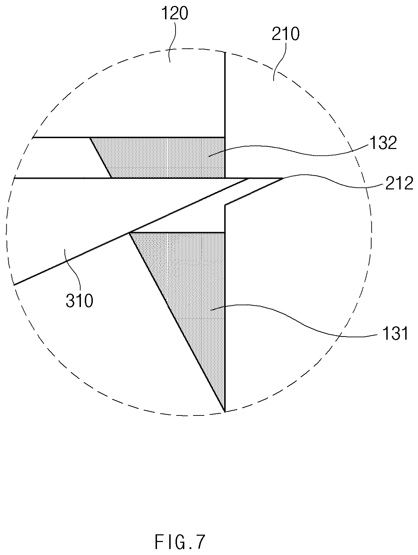

Referring to FIGS. 4, 7 and 8, the second cutters 310, 320 may cut the protruding burr 130 while the end where the blade is formed contacts or collides with one side surface of the first cutter 210. The second cutters 310, 320 may be provided to continuously and repeatedly cut each burr 130 formed on the electrodes 100 cut by the electrode cutting unit 200 as they reciprocate. As the second cutters 310, 320 continuously and repeatedly cut the burr 130, they repeatedly contact or collide with one side surface of the first cutter 210, and thus the end of the second cutters 310, 320 in contact with the first cutter 210 may be easily damaged. Accordingly, a guard groove 212 may be formed in the first cutter 210 to prevent damage caused by collision.

The guard groove 212 may be a groove recessed so that the end of the second cutters 310, 320 may be inserted into one side surface of the first cutter 210 along the length direction. Since the second cutters 310, 320 cut the burr 130 and then the end thereof is inserted into the guard groove 212, damage caused by contact or collision with the first cutter 210 may be prevented.

The deburring unit 300 may further include a pair of second holders 311 and a second support portion 330.

A pair of second holders 311 may be spaced apart from each other by a predetermined distance so that they may be coupled to one side and the other side of the second cutters 310, 320 in the length direction, respectively. The length direction of the second cutters 310, 320 is a direction forming the longest length in the second cutters 310, 320 and may be a direction in which a blade located at the end of the second cutters 310, 320 is formed along one direction.

The pair of second holders 311 may have one end coupled to the second cutters 310, 320 and the other end protruding outward further than the second cutters 310, 320 along the length direction of the second cutters 310, 320.

The other end of the second holder 311 is located on the second guide rail 331 of the second support portion 330, and the second holder 311 may be guided along the length direction of the second guide rail 331. Since the second holder 311 is guided along the length direction of the second guide rail 331, the second cutters 310, 320 coupled to the second holder 311 may also be guided along the direction in which the second guide rail 331 is formed together with the second holder 311.

The second support portion 330 may support the second cutters 310, 320 and the pair of second holders 311 so that the second cutters 310, 320 and the pair of second holders 311 may move in a direction parallel to the direction in which the electrode 100 is disposed.

The second support portion 330 may be provided in a pair, and the pair of second support portions 330 may be spaced apart from each other by a predetermined distance so that the second cutters 310, 320 may be disposed therebetween along the length direction. The pair of second support portions 330 are disposed side by side with their surfaces facing each other, and the distance spaced apart along the length direction may be kept constant.

The second support portion 330 may be disposed so that the length direction of the second support portion 330 is parallel to the direction in which the second cutters 310, 320 move to cut the burr 130, and the second support portion 330 may be disposed parallel to the direction in which the electrode 100 is disposed in the electrode processing device 10.

A second guide rail 331 may be formed along the length direction of the second support portion 330 on the second support portion 330. The second guide rail 331 may be formed parallel to the direction in which the electrode 100 is disposed. The pair of second support portions 330 may have a second guide rail 331 formed on each of the surfaces facing each other.

The second guide rail 331 may be formed to be recessed into the outer surface of the second support portion 330 to a predetermined depth along the length direction of the second support portion 330.

The other end of the second holder 311 is inserted into the second guide rail 331, and the second holder 311 may be guided along the length direction of the second guide rail 331. Since a pair of second holder 311 are coupled to both sides of the second cutters 310, 320, the second cutters 310, 320 may be guided together with the second holder 311 as the second holder 311 is guided by the second guide rail 331. The second cutters 310, 320 may move along the arrangement direction of the electrode 100 as they are guided together with the second holder 311.

The second cutters 310, 320 may move closer to or farther away from the burr 130 protruding from the electrode 100 as they are guided by the second holder 311. The second cutters 310, 320 may cut the electrode 100 as they move closer to the burr 130.

The second cutters 310, 320 may be disposed to further protrude from the second holder 311 in the direction in which the second cutters 310, 320 cut the burr 130. That is, the second cutters 310, 320 may protrude further than the second holder 311 along the width direction of the second cutters 310, 320. The width direction of the second cutters 310, 320 is a direction perpendicular to the length direction and the thickness direction, and may mean the direction in which the second cutters 310, 320 move to cut the burr 130. Since the end of the second cutter 310, 320 contact or collide with one side surface of the first cutter 210 to cut the protruding burr 130, the second cutters 310, 320 may be disposed to protrude further than the second holder 311 so that the end of the second cutters 310, 320 may contact or collide with one side surface of the first cutter 210.

The end of the second cutters 310, 320 in which the blade is formed may be disposed closer to the electrode 100 than the second holder 311. The end of the second cutters 310, 320 in which the blade is formed may be disposed at positions closet to the electrode 100 so as to remove the burr 130 protruding from the electrode active material 120 to the maximum.

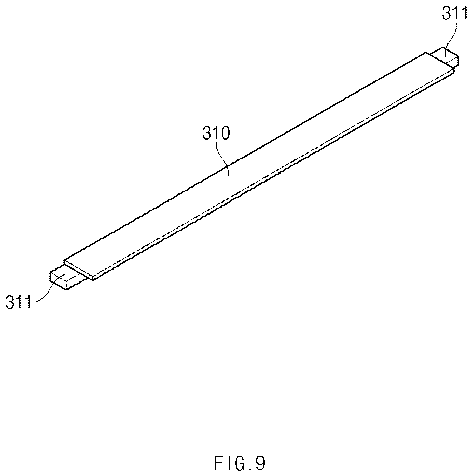

Referring to FIG. 9, as a first implementation example of the second cutter 310, the second cutter 310 is coupled to the surface of the second holder 311 facing the electrode 100, so that the second cutter 310 may be positioned closer to the electrode 100 than the second holder 311, and may cut the burr 130 protruding from the electrode 100. The surface of the second cutter 310 facing the electrode 100 is formed in a planar shape, and the second cutter 310 may be disposed parallel to the electrode 100. The second cutter 310 may move in a direction parallel to the electrode 100 as it is guided by the second holder 311. Additionally, since the second cutter 310 protrudes further than the second holder 311 along the direction in which the second cutter 310 cuts the burr 130, the second cutter 310 may cut the burr 130 by contacting or colliding with the first cutter 210. The second cutter 310 may have the end extending in a straight line along the length direction so that the end may contact or collide with one side surface of the first cutter 210 to cut the burr 130.

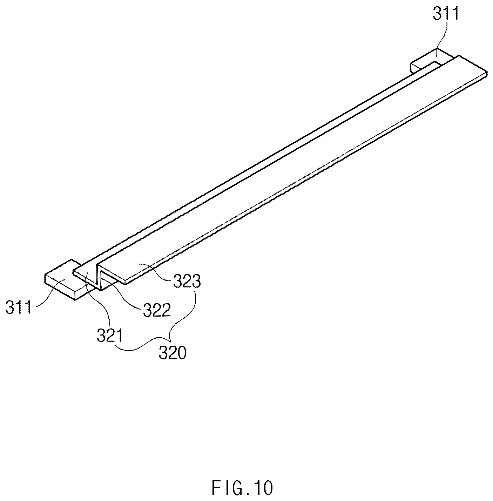

Referring to FIG. 10, as a second implementation example of the second cutter 320, the second cutter 320 may include a first portion 321, a second portion 322, and a third portion 323 so that the end where the blade is formed may be disposed closer to the electrode 100.

The first portion 321 may be coupled to the surface of the second holder 311 facing the electrode 100. The first portion 321 may have one end coupled to the second holder 311 and the other end protruding from the second holder 311 toward the direction in which the second cutter 320 cuts the burr 130. The first portion 321 may stably support the second portion 322 connected to the first portion 321 and the third portion 323 when the third portion 323 cuts the burr 130 protruding from the electrode 100.

The second portion 322 is disposed between the first portion 321 and the third portion 323, and may have one end connected to the first portion 321 and the other end connected to the third portion 323. The second portion 322 may be formed to extend toward the electrode 100, forming a predetermined angle with respect to the first portion 321 in a direction closer to the electrode 100. The second portion 322 may position the third portion 323 as close to the electrode 100 as possible so that the third portion 323, which cuts the burr 130, may cut as much of the burr 130 protruding from the electrode 100 as possible. The predetermined angle formed by the second portion 322 with respect to the first portion 321 is sufficient as long as the third portion 323 may be closer to the electrode 100, and may be a right angle, an acute angle, or an obtuse angle.

The third portion 323 may have one end connected to the second portion 322 and may be disposed parallel to the direction in which the electrode 100 is disposed. Since a blade is formed at the other end of the third portion 323, the third portion 323 may cut the burr 130 protruding from the electrode 100. The third portion 323 is connected to the second portion 322, so that the surface facing the electrode 100 may be disposed very close to the electrode 100, and the burr 130 protruding from the electrode 100 may be cut to the maximum size. The other end of the third portion 323 may mean the end of the second cutter 320.

The third portion 323 may have a surface facing the electrode 100 formed in a planar shape and the other end extending in a straight line along the length direction so that the other end may contact or collide with one side surface of the first cutter 210 and cut the burr 130. The third portion 323 may be disposed parallel to the direction in which the electrode 100 is disposed and may be driven to move along the direction in which the electrode 100 is disposed.

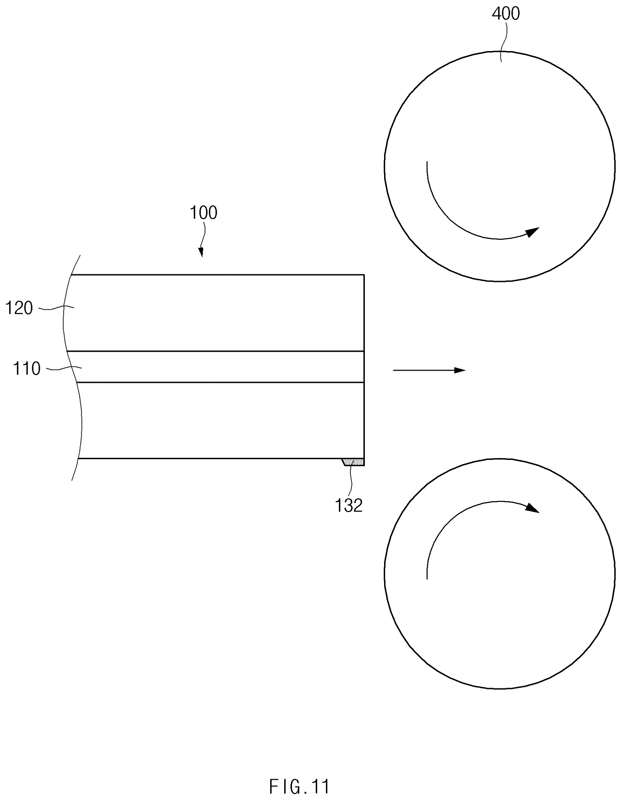

Referring to FIG. 11, the electrode processing device 10 may further include a pressing portion. The pressing portion may press the electrode from which the burr is cut by the deburring unit 300 to remove the residual portion 132 protruding from the electrode. The pressing portion includes a pair of pressing rollers 400, and the pair of pressing rollers 400 may rotate in opposite directions. A pair of pressing rollers 400 may press the electrode 100 located therebetween and simultaneously move it in one direction. The electrode 100 pressed by the pair of pressing rollers 400 may be formed so that the density of both ends of the electrode 100 where the protruding residual portion 132 was located is greater than that of the adjacent region by pressing the protruding residual portion 132.

The electrode processing device 10 may further include a winding portion 500 that winds the electrode 100 pressed by the pressing rollers 400 together with separators 600, 610. The winding portion 500 may wind at least one of the electrode 100 and the separators 600, 610. More specifically, the winding portion 500 may wind the electrode 100, the separators 600, 610, and the other electrode 620 in a state where the separators 600, 610 are positioned between the electrode 100 and the other electrode 620 so that the electrode 100 and the other electrode 620 are not in contact with each other.

### Embodiment 2

As Embodiment 2 of the present disclosure, an electrode assembly (not shown) of the present disclosure may include at least one of an electrode 100 and separators 600, 610. The electrode assembly may be an electrode assembly in the form of a jelly-roll in which the electrode 100 and the separators 600, 610 are stacked and wound. The electrode 100 may be manufactured by an electrode processing device 10, and a detailed description of the electrode processing device 10 may be replaced by the above description.

The wound electrode 100 included in the electrode assembly may include a wound current collector 110 and an electrode active material 120 coated on an inner surface and an outer surface of the wound current collector 110. The electrode active material 120 located on the outer surface of the end of the electrode 100 may have a higher density than an adjacent region because the burr 130 is cut by the second cutters 310, 320 and pressed by the pressing roller 400.

### Embodiment 3

Referring to FIGS. 1 and 3 to 6, as Embodiment 3 of the present disclosure, a method for driving an electrode processing device may include an electrode cutting step, a burr cutting step, a pressing step, and a winding step.

The electrode cutting step may be a step in which the first cutter 210 cuts the coated portion region of the electrode 100. As the first cutter 210 cuts the coated portion of the electrode 100, a burr may protrude in the electrode active material 120 from the electrode 100 along the cutting direction of the first cutter 210. The first cutter 210 that cuts the electrode 100 may be fixed in position for a predetermined time at a position adjacent to the cutting surface of the electrode 100.

The burr cutting step may be a step in which the deburring unit 300 is driven as the first cutter 210 cuts the electrode 100. As the deburring unit 300 is driven, the second cutters 310, 320 may be driven to move toward one side surface of the first cutter 210 whose position is fixed in order to cut the burr 130 generated in the electrode cutting step. The end of the second cutters 310, 320 may cut the burr 130 as they are in contact with one side surface of the first cutter 210. As the burr 130 is cut by the second cutters 310, 320, it may form a separation portion 131 that is separated and broken away from the burr 130 and a residual portion 132 that is positioned between the second cutters 310, 320 and the electrode 100 and is not removed by the second cutters 310, 320. The residual portion 132 may still protrude from the electrode 100 to a predetermined height.

The pressing step may be a step for removing the residual portion 132 that the second cutter could not remove. The pressing step may press the electrode 100 by a pair of pressing rollers 400. The pair of pressing rollers 400 may press the electrode 100 located between the pair of pressing rollers 400 while moving in one direction as they rotate in opposite directions. The pair of pressing rollers 400 may uniformly form the thickness of the electrode 100 by pressing the residual portion 132 protruding from the electrode 100. As the residual portion 132 is pressed by the pair of pressing rollers 400, the electrode active material 120 at both ends of the electrode 100 may be formed to have a higher density than an adjacent region.

The winding step may be a step of winding the electrode 100 processed by going through the electrode cutting step, the burr cutting step, and the pressing step together with the separators 600, 610. More specifically, the winding step may be a step of forming an electrode assembly (not shown) by winding at least one of the electrode 100 processed by going through the electrode cutting step, the burr cutting step, and the pressing step, the plurality of separators 600, 610, and the other electrode 620.

In the winding step, when the electrode 100 processed by going through the electrode cutting step, the burr cutting step, and the pressing step is wound, the electrode 100 may be wound so that the region where the burr 130 is cut faces outward. When a residual portion 132 still exists in the electrode 100 going through the burr cutting step and the pressing step, the residual portion 132 may be wound to face the outside of the electrode assembly, and thus the electrode 100, the separators 600, 610, and the other electrode 620 located outside the residual portion 132 may press the residual portion 132.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

10: Electrode processing device
100: Electrode
110: Current collector
120: Electrode active material
130: Burr
131: Separation portion
132: Residual portion
200: Electrode cutting unit
210: First cutter
211: First holder
212: Guard groove
230: First support portion
231: First guide rail
310, 320: Second cutter
311: Second holder
321: First portion
322: Second portion
323: Third portion
330: Second support portion
331: Second guide rail
400: Pressing roller
600, 610: Separator
620: The other electrode

## Claims

1. An electrode processing device, comprising:
an electrode cutting unit comprising a first cutter that cuts an electrode; and
a deburring unit comprising a second cutter that cuts a burr protruding from the cut electrode cutting surface in the cutting direction of the first cutter.

2. The electrode processing device according to claim 1,
wherein the electrode cutting unit further comprises:
a pair of first holders coupled to both sides of the first cutter; and
a first support portion formed with a first guide rail guiding the first holder.

3. The electrode processing device according to claim 1,
wherein the second cutter is driven in an intersecting direction with respect to the direction in which the first cutter cuts the electrode.

4. The electrode processing device according to claim 2,
wherein the second cutter is driven along a direction parallel to the direction in which the electrode is disposed.

5. The electrode processing device according to claim 3,
wherein the deburring unit further comprises:
a pair of second holders coupled to both sides of the second cutter; and
a second support portion formed with a second guide rail guiding the second holder.

6. The electrode processing device according to claim 5,
wherein the second cutter protrudes from the second holder in a direction in which the second cutter cuts the burr.

7. The electrode processing device according to claim 5,
wherein an end of the second cutter is disposed closer to the electrode than the second holder.

8. The electrode processing device according to claim 7,
wherein the second cutter is disposed parallel to the electrode, and a surface thereof facing the electrode is formed in a planar shape.

9. The electrode processing device according to claim 7,
wherein the second cutter comprises:
a first portion coupled to the second holder;
a second portion having one end connected to the first portion and forming a predetermined angle with respect to the first portion in a direction of being closer to the electrode; and
a third portion having one end connected to the second portion and disposed parallel to the electrode.

10. The electrode processing device according to claim 9,
wherein the third portion has a surface facing the electrode formed in a planar shape and the other end extending in a straight line along the length direction.

11. The electrode processing device according to claim 1,
wherein a guard groove recessed along the length direction is formed on one surface of the first cutter, and the second cutter is driven so that its end is inserted into the guard groove.

12. The electrode processing device according to claim 1,
wherein the deburring unit is driven as the electrode is cut.

13. The electrode processing device according to claim 1,
wherein the first cutter is fixed in position for a predetermined time after cutting the electrode.

14. The electrode processing device according to claim 13,
wherein the second cutter is driven to move toward one side surface of the first cutter whose position is fixed, and cuts the burr located on one side surface of the first cutter.

15. The electrode processing device according to claim 14,
wherein the second cutter cuts the burr by contacting one side surface of the first cutter located in front of the second cutter in the movement direction.

16. The electrode processing device according to claim 15, further comprising:
a pressing portion that presses the electrode from which the burr is cut.

17. The electrode processing device according to claim 16, further comprising:
a winding portion that winds the pressed electrode together with a separator.

18. The electrode processing device according to claim 17,
wherein the winding portion winds the electrode so that the region where the burr is cut faces outward.

19. An electrode assembly in which at least one of an electrode and a separator is stacked and wound,
wherein the electrode comprises:
a current collector; and
an electrode active material coated on an inner surface and an outer surface of the current collector,
wherein the electrode active material located on the outer surface of the end of the electrode has a higher density than an adjacent region.
